# EUROPEAN PATENT APPLICATION

(11) **EP 2 940 958 A1**
(43) Date of publication of application: **04.11.2015**
(21) Application number: 14305635.6
(22) Date of filing: 29.04.2014
(51) Int. Cl.: H04L 29/06, H04L 29/08

(54) **Methods and devices for responding to a streaming request, access node and method for operating the same**

(71) Applicant: ALCATEL LUCENT, 92100 Boulogne-Billancourt (FR)
(72) Inventor: Van Bogaert, Jan, 2018 Antwerp (BE)
(74) Representative: Zinsinger, Norbert

(57) **Abstract**

The invention refers to methods and devices for responding to a streaming request (S). In order to allow for efficient network layer access at locations within an access network (11) where network elements (21) are installed that operate on the data link layer, a method for responding to a streaming request (S) related to a content stream (CS) to be delivered by a content delivery network (27) to a node (23) connected to a private network (13) of a customer of an operator of a fixed access network (11) is provided, wherein the method (41) comprises receiving (45) the streaming request (S); determining (47) a source address (N) of the streaming request (S); deciding (49) on whether the request (S) shall be served by a content delivery network entity (33) belonging to the private network (13), wherein the deciding (49) is based on the determined source address (N); and returning (57) an address of the content delivery network entity (33) to the node (23) if a result of said deciding is that the request shall be served by the content delivery network entity (33).

## Description

### Field of the invention

The present invention refers to method for responding to a streaming request and to a server operable for executing such a method. Moreover, the invention refers to an access node and a method for operating the access node as well as to a customer's premises device and a method for operating the same.

### Background

Content Delivery Networks (CDN) are well-known in the art. When distributing content (e.g. video and/or audio streams or files) of a large size over the Internet or any other Internet Protocol (IP) based network to a high number of devices, scalability issues arise when using a single server for distributing the content. In particular, the server may be overloaded or a connection for connecting the server to the IP-based network may become a bottleneck.

Content delivery networks have CDN nodes installed at points within the topology of the network which are closer to certain groups of devices. The CDN nodes hold their own copy of the content so that they can distribute the content directly to the group of devices. By using multiple CDN nodes, content delivery networks can resolve the scalability issue. Basically, content delivery networks are based on an approach according to which the network architecture is designed - at least on the application layer - such that the content can be delivered to the device as most efficiently as possible. This approach is often referred to as Content Networking.

In the last years, telecommunication network operators have begun to offer video streaming like services such as television services (IPTV) to their customers. Since content streams present in such services typically have a rather large bitrate and are normally transmitted simultaneously to a large number of different customer's devices, a content delivery network may be applied for providing these services. This enforced the replacement of multicast UDP based streaming, traditionally used for delivering IPTV content, by unicast TCP adaptive streaming, which is more suitable for individual consumption, enabling new functionality such as pause and rewind. Moreover, quality adaption based on network conditions is becoming important as TV is being watched on portable devices that are typically connected using wireless transmission media (e.g. Wi-Fi) in the home environment. Lastly, this new delivery method may eliminate the need for using set-top boxes, as connected TV's can have one or more apps that deal with functions traditionally done by set-top boxes, like menu generation, program guide and content protection.

Access networks, such as fixed access networks, used by telecommunication operators often have concentrators located rather close to the customers. Such a concentrator may be e.g. an access node for optical or electrical access lines. An access node operates typically on the data link layer of a network. CDN nodes, however, are application layer network entities that require access on the network protocol layer (e.g. on the IP layer).

### Summary

For providing streaming service efficiently it is desirable to place CDN nodes close to the access nodes or to integrate the CDN nodes in the access nodes. Thus, the object of the present invention is to provide methods and devices that allow to provide network layer access and CDN functionality at locations within an access network where network elements are installed that operate on the data link layer and below only.

According to an embodiment of the present invention, a method for responding to a streaming request related to a content stream to be delivered by a content delivery network to a node connected to a private network of a customer of an operator of a fixed access network is provided, wherein the method comprises receiving the streaming request; determining a source address of the streaming request; deciding on whether the request shall be served by a content delivery network entity belonging to the private network, wherein the deciding is based on the determined source address; and returning an address of the content delivery network entity to the node if a result of said deciding is that the request shall be served by the content delivery network entity.

The method may be executed on any node connected to a public IP network such as the Internet. Basically, the method redirects the streaming request to an address of the private network. An access node implemented according to embodiments described below has access to the private network and can therefore function as a CDN node or forward the redirected streaming request to a CDN node located close to the access node. As a consequence, the streaming request can be served from a CDN node located close to the access node, preferably co-located with the access node. This CDN node is very close to the customer. Therefore, content specified in the streaming request is delivered to the customer efficiently. In particular, the CDN node may receive the content once from other nodes of the content delivery network and distribute multiple copies of the content to nodes of multiple private networks connected to the access node via subscriber lines (e.g. electrical Digital Subscriber Lines or optical subscriber lines).

In an embodiment, the deciding comprises concluding that the streaming request shall be served by the content delivery entity if the source address is a public network layer address of the fixed access network (i.e. an address belonging to the access network and/or served by the access network). In many cases, the node has a non-routable private address, which is not visible by the method because Network Address Translation (NAT) is performed and the address of the node is mapped to a public and routable address served by the access network that differs from the address of the node. However, if the method successfully matches the source address to a known address prefix assigned to the access network then the method may conclude that the request has been transmitted from within a private network connected to the access network. Otherwise, the streaming request has been sent over a different access network.

In an embodiment, the address of the content delivery entity is returned as part of a redirection message, preferably an application layer redirection message. The redirection message may be a Hyper Text Transfer Protocol (HTTP) response message including the address. For example, the response message may include a redirection error code and a Location header including a Unified Resource Locator (URL), the host part of which includes the address.

It should be noted that the address of the content delivery entity may be, for example, a predefined address belonging to an address range assigned to the private network, preferably a predefined IP address. Preferably, the predefined address should be equal in each private network connected to the access network from which the content delivery network is used. When using such a predefined address, the method does not need to distinguish between individual private networks of different customers when generating the address to be returned.

The address may be any type of address that allows to reach the content delivery entity within the private network. Since the content delivery entity belongs to the private network - although being located in the access node - it is sufficient that the address is unique within the private network, i.e. has a scope limited to the private network. In one embodiment, the address is an IPv4 address or an IPv6 address. The IPv4 or IPv6 address may have a prefix intended for non-routable and private or local addresses. In another embodiment, the address may be a DNS domain name, e.g. a Fully Qualified Domain Name (FQDN). A local name server of the private network may translate the domain name returned by the method to an IPv4 or IPv6 address of the content delivery network entity.

In an embodiment, said deciding comprises checking whether a content stream specified in the streaming request is currently available for being served by the content delivery network entity. For example, the method may compare whether the request refers to a temporal position within a requested stream which is within a storage time window during which the content delivery network entity can retrieve the stream from a storage arrangement of the access node or located close to the access node. It should be noted that the check whether the specified content stream is available is optional, i.e. some embodiments do not include this check.

According to another embodiment of the present invention, a portal server for responding to a streaming request related to a content stream to be delivered by a content delivery network to a node connected to a private network of a customer of an operator of a fixed access network is provided, wherein the portal server is operable for receiving the streaming request; determining a source address of the streaming request; deciding on whether the request shall be served by a content delivery network entity belonging to the private network, wherein the deciding is based on the determined source address; and returning an address of the content delivery network entity to the node if a result of said deciding is that the request shall be served by the content delivery network entity.

In an embodiment, the portal server is operable, preferably programmed for executing the method for responding to a streaming request, which method is herein described.

According to yet another embodiment of the present invention, a method for operating an access node of a fixed access network is provided, the method comprising providing wide area network access to a private network of a customer of a network operator of the fixed access network; and communicating with a customer's premises device in order to access the private network directly for providing local network services; wherein the method further comprises receiving a streaming request from a node connected to the private network, the streaming request being addressed to a content delivery network entity belonging to the private network; and transmitting a content stream specified in the streaming request to the node.

In an embodiment, the method comprises receiving the specified content stream from a content delivery network and storing the received stream in a storage arrangement assigned to multiple, preferably all, private networks for which the access node is providing network access. In an embodiment, the storage arrangement is part of a content delivery network node. The content delivery network node may be integrated in the access node or associated with the access node. In the latter case, the content delivery network node may be located close to the access node so that the content delivery network entity may retrieve a content stream from the content delivery network node inexpensively and with a high bitrate.

In an embodiment, the method comprises receiving a content stream from a content delivery network. For example, receiving the content stream may comprise joining a multicast group over which the specified stream is transmitted. The transfer of the content stream from the content delivery network entity to the node of the private network is done by unicast transmission within the private network.

In an embodiment, the method may comprise maintaining the stored content stream in the storage arrangement for a predefined time window ending at the current time of execution of the method (i.e. the current time of day). For example, a predefined set of live streams may be stored during the time window. The live streams may be TV programs so that a TV streaming service (e.g. an HTTP based streaming service) may be provided efficiently to a large number of customers.

In an embodiment, providing access to the private network comprises establishing a tunnel between the customer's premises device and the access node. Providing access to the private networks comprises connecting the content delivery network entity to the private network such that the content delivery network entity is accessible from within the private network using an address belonging to an address range (e.g. an IP prefix) assigned to the private network. As consequence, the content delivery network entity behaves like a normal, physical network entity of the private network. However, the content delivery network entity is a part of the access node. For example, a processor of the access node may emulate the content delivery access network entity. Since the content delivery network entity is not physically present in the customer's private network, it is also referred to as a virtual network entity.

According to still another embodiment of the invention, an access node for a fixed access network is provided, the access node comprising forwarding circuitry adapted for providing wide area network access to a private network of a customer of a network operator of the fixed access network; and a processor operable for communicating with a customer's premises device in order to access the private network directly for providing local network services; wherein the processor is further operable for receiving a streaming request from a node connected to the private network, the streaming request being addressed to a content delivery network entity belonging to the private network; and transmitting a content stream specified in the streaming request to the node.

In an embodiment, the access node comprises a DSL Access Multiplexer (DSLAM) and/or an Optical Line Termination (OLT). Accordingly the subscriber line may be an electrical line (DSL) or an optical line that is part of a Passive Optical Network (PON). The subscriber line may also be a point-to-point link, e.g. one optical line dedicated per home.

In an embodiment, the access node is operable, preferably programmed, for executing a method for operating an access node, which method is herein described.

According to a further embodiment of the present invention, a method for operating a customer's premises device connectable to customer side end of a subscriber line of a fixed access network is provided, the method comprising establishing and/or providing a communication link to a network element of the access network, the communication link being adapted for granting wide area network access to a private network of a customer of an operator the access network; and forwarding a streaming request transmitted by a node of the private network to a content delivery network entity of the access node; receiving a response (e.g. a content stream specified in the streaming request) to the streaming request from the content delivery network entity; and forwarding the received response to the node of the private network.

According to another embodiment of the present invention, a customer's premises device connectable to customer side end of a subscriber line of a fixed access network is provided, the device comprising an arrangement for establishing and/or providing a communication link to a network element of the access network, the communication link being adapted for granting wide area network access to a private network of a customer of an operator the access network; and a processor operable for forwarding a streaming request transmitted by a node of the private network to a content delivery network entity of an access node of the access network, receiving a response to the streaming request from the content delivery network entity and forwarding the received response to the node of the private network.

Moreover, a software program product, preferably a computer readable storage medium, is provided, the computer software program product comprising a computer program that is programmed for executing one of the methods herein described.

Finally, according to a further embodiment, a content delivery system is provided, comprising a portal server, which is described herein, an access node described herein and/or a customer premises device described herein. Basically, the content delivery system may comprise the content delivery network and an access network having one or more access nodes that comprise the content delivery network entity. The portal server, the access node and/or the customer's premises device constitute a plurality of interrelated products. The advantages of the invention can be particularly well exploited when combining these products in such a content delivery system.

### Brief description of the figures

Exemplary embodiments and further advantages of the present invention are shown in the Figures and described in detail hereinafter.
- Figure 1: shows a content delivery system including a portal server and a fixed access network;
- Figure 2: shows a flowchart of a method for responding to a streaming request transmitted by a node connected to the fixed access network via a private network; and
- Figure 3: shows a flowchart of a method for operating an access node of the fixed network shown in Figure 1.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

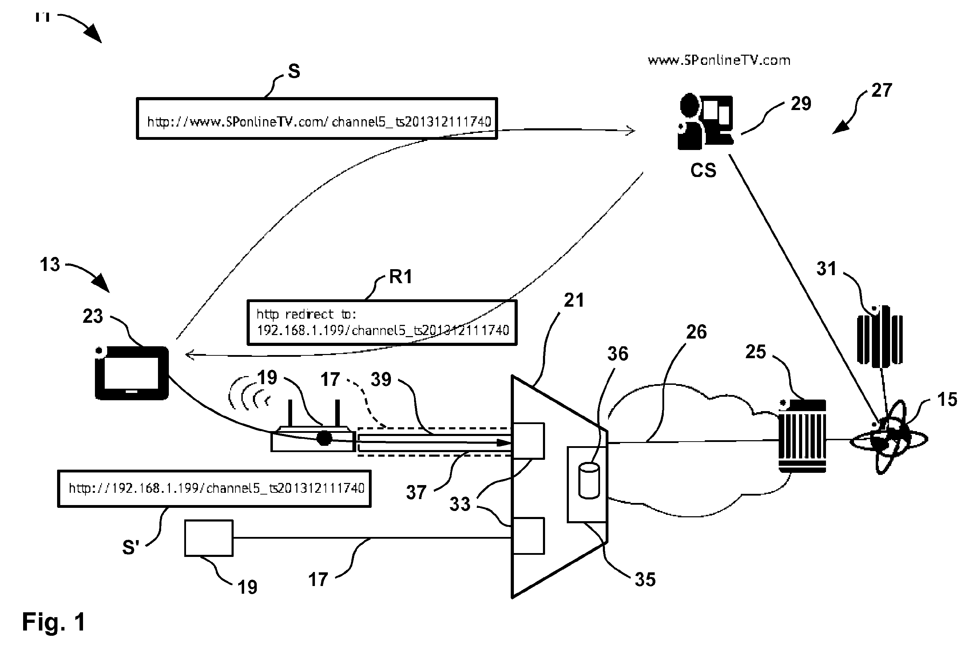

Figure 1 shows an access network 11 according to an embodiment of the invention. The access network 11 is a fixed access network adapted to connect a private network 13 of a customer of an operator of the access network 11 to a wide area network like the Internet 15 using at least one subscriber line 17.

In the shown embodiment, the private network 13 is a wireless network e.g. according to IEEE 802.11 and related technical standards. However, the private network 13 may be based on any technology including Ethernet according to IEEE 802.3 and related technical standards. A node 23 typically owned by the customer may be connected to the private network 13. The node 23 may be any networking device that can process streaming-like content (e.g. video and/or audio streams) such as set-top box for IP television (IPTV), a TV set having a communication network interface, a Personal Computer or any type of handheld devices including smart phones and tablet computers.

There may be several of these nodes 23 present in network 13 although Figure 1 shows only one node 23.

The subscriber line 17 connects a customer's premises device 19 of the private network 13 to an access node 21 of the access network 11, thereby providing a bidirectional data link between the customer's premises device 19 and the access node 21.

The customer's premises device 19 will further be referred to as "Home Gateway" although it is not strictly necessary that it includes typical gateway functions like Internet Protocol (IP) routing, Network Address Translation (NAT) or the like. In the shown embodiment both the private network 13 and the Home Gateway 19 are part of the customer's premises.

The subscriber line 17 may be based on any suitable transmission technology such as electrical transmission over the subscriber line 17 comprising at least one wire pair. For electrical transmission over the subscriber line 17, known Digital Subscriber Line (DSL) Technology, e.g. ADSL, VDSL2, etc, may be applied. Accordingly, the access node 21 may comprise a DSL Access Multiplexer (DSLAM) to which the subscriber line 17 is connected and the home gateway 19 may include a DSL modem.

In other embodiments, optical transmission techniques may be applied. In these embodiments, the subscriber line 17 comprises at least one optical waveguide such as an optical fiber. Such an optical subscriber line 17 may be part of a Passive Optical Network (PON). In the latter case, the access node 21 comprises an Optical Line Termination (OLT) and the home gateway comprises an Optical Network Unit (ONU).

In yet another embodiment, the access network 11 comprises both electrical (e.g. DSL) and optical (e.g. PON or point-to-point) subscriber lines 17. Such an access network may have multiple access nodes 21 of different types, some of them including a DSLAM and others including an ONU. In addition, at least one access node 21 may be present in the access network 11 that supports both electrical and optical subscriber lines 17.

Although the access network 11 may have many access nodes 21 and a large number of home gateways 19 may be connected to a single access node 21, Figure 1 shows just one access node to which two home gateways 19 of two different customers are connected. For the sake of simplicity, only one private network 13 is depicted in Figure 1.

The at least one access node 21 is connected to an IP edge router 25 of the access network 11 via a backhaul link 26. The edge router 25 is arranged for connecting the at least one access node 21 to the Internet 15, thereby providing Internet access to devices (e.g. node 23) connected to the private network 13. In contrast to the edge router 25, the access node 21 does not have network layer forwarding functions like IP routing. Typically, the access node 21 forwards data link layer protocol data units (e.g. Ethernet frames or ATM cells) between the home gateway 19 and the edge router 25 without performing forwarding decisions related to network layer protocol data units (e.g. IP packets).

Besides the access network 11, Figure 11 shows a Content Delivery Network (CDN 27). The content delivery network 27 comprises at least one portal server 29. The portal server 29 is operable for receiving a streaming request S e.g. from the Internet 15. The streaming request S may have been sent by any node having Internet access such as the customer's node 23. In the shown embodiment, the streaming request is a Hyper Text Transfer Protocol (HTTP) request, e.g. a GET request. However, the invention is not limited to a particular application layer protocol. The streaming request comprises, e.g. as a part of a Uniform Resource Locator (URL), a descriptor of a content stream CS to be directed to the requesting node 23. The content stream CS may be a media stream like a video stream and/or an audio stream. For example, the content stream CS may be a live stream. A live stream is a stream that shall be forwarded to the requesting node 23 as soon as possible after the creation of the stream. A typical example of a live stream is a television program. The stream may also be a pre-recorded stream which has been stored within the content delivery network 27 a rather long time before its retrieval by means of the streaming request S. Video on demand services typically use pre-recorded streams.

In addition to processing streaming requests S, the portal server 29 may provide a web page and/or a web-based application that allows a user of the requesting node 23 to find a particular content stream the user is interested in (e.g. by providing search functions or menus, etc.).

The content delivery network 27 comprises one or more content delivery network nodes such as the CDN node 31. A CDN node 31 stores replicas of a primary copy of a stream that may be generated or stored on a single node of the content delivery network 27 such as on the portal server 29. Using multiple CDN nodes avoids bottlenecks in the network or in the node storing the primary copy in cases where the content stream CS is forwarded simultaneously to a large number of nodes 23.

Since the access node 21 operates on the data link layer of the network only, conventional content delivery networks have their CDN nodes 31 connected directly to the Internet 15. However, in many usage scenarios of the content delivery network 27 a large number of nodes 23 connected to the same access node 21 may consume simultaneously the same stream CS, in particular the same live stream. As a consequence, a large number of replicas of the same stream are transferred from a CDN node 31 over the backhaul link 26 to the access node 21. The access node 21 then forwards the individual replicated streams to the respective nodes 23. The transfer of many identical replicas of the same stream causes an unnecessary high load on the backhaul link 26 and on a section of the Internet 15 between the edge router 25 and the CDN node 31. The large number of replicas of the stream has a negative effect on the scalability of the content delivery network 27, in particular when providing HTTP-based TV services or similar services to many customers of the fixed access network 11.

Thus, the access network 11 described herein is improved such that the number of replicated streams is heavily reduced in particular in live streaming applications. As a consequence, the access network 11 is particularly well-suited for providing HTTP-based TV services or other live streaming services. Basically, the portal server 29 is arranged for returning to the requesting node 23 an address of a content delivery network entity 33, which is present in the customer's private network 13 and located in the access network 11, preferably located in the access node 21, thereby redirecting the request emitted by the node 23 and originally destined to the portal server 29 to the CDN entity 33.

The CDN entity 33 has a network layer protocol address (e.g. IP address) that belongs to an address range of network layer protocol addresses assigned to the private network 13. This address range may include network layer protocol addresses reserved for private networks, such as the IPv4 prefix 192.168.1.0/24 shown in the exemplary scenario of Figure 1.

The address returned by the portal server 29 is an address that belongs to the CDN entity 33 of the respective private network 13. In the shown embodiment, the CDN entities 33 of the individual private networks 13 have the same address (further referred to as CDN entity address). In the shown embodiment, the CDN entity address is a predefined IPv4 address, e.g. 192.168.1.199. However, the CDN entity address does not need to be a network layer protocol address. Any other type of identifier that can be resolved within the private networks 13 may be used as the CDN entity address; for example, a predefined DNS domain name such as a Full Qualified Domain Name (FQDN) may also be used. In another embodiment, an IPv6 address having a link local scope is used as the CDN entity address instead of or in addition to a predefined IPv4 address. It should be noted the CDN entities 33 may have multiple predefined addresses related to different addressing or naming schemes. However, at least a certain number of private networks 13 should have a CDN entity 33 with the same address or identifier so that the portal server 29 does not need to distinguish between the individual customers of the same access network 11 when calculating the CDN entity addresse to be returned.

As shown in Figure 1, the access node 11 comprises an associated CDN node 35. The CDN entities 33 of the private networks 13 are associated with the associated CDN node 35 of the same access node 21. In the shown embodiment the CDN node 35 is integrated in the access node 21. In another embodiment, the further CDN node 35 is separated from the access node 21. In this embodiment, a single CDN node 35 may be associated with the CDN entities 33 of multiple access nodes 21.

The associated CDN node 35 may comprise a storage arrangement 36 for temporarily storing one or more content streams CS received from other nodes of the content delivery network 27. The storage arrangement 36 may include any type of mass storage media including magnetic storage (e.g. hard disc drive) or semiconductor storage (e.g. Flash Memory). Alternatively, live streams may cached in volatile memory, e.g. in the main memory of a computer of the access node 21.

In an embodiment, the content delivery network 27 supports bitrate adaptive streaming. That is, multiple versions of the same content stream CS are provided, which versions are encoded using different coding algorithms and/or different parameters of the same coding algorithm so that the different versions have different mean bitrates. The version may be selected depending on the state of the network and/or the capabilities of the requesting node 23. In the shown embodiment, the multiple versions of the content stream CS are stored in the storage arrangement 36.

Although the CDN entity 33 is physically located in the access network 11, it logically belongs to the private network 13 of a customer. Consequently, the CDN entity has direct access to the private network 13, i.e. has a network layer protocol address belonging to an address range assigned to the private network 13. A processor of the access node 21 may be programmed for providing functions of the CDN entity 33. In addition, the processor may be programmed for communicating with the home gateway 19 so that the CDN 33 is connected to the private network 13. To this end, a tunnel 37 may be established between the home gateway 19 and the access node 21. In the shown embodiment, the Generic Routing Encapsulation (GRE) protocol is used for implementing the tunnel 37. However, any other protocol may also be used for this purpose.

In the shown embodiment, the tunnel 37 is separate from an access pipe 39 used for communicating network layer protocol data units (typically IP packets) to the edge router 25 and receiving such protocol data units therefrom. The access pipe 39 may be implemented according to the technical specification of the access network (e.g. DSL specifications) and may include e.g. a further tunnel for transporting IP packets between the home gateway 19 and the edge router 25. Both the tunnel 37 as well as at least a part of the access pipe 39 is arranged in the subscriber line 17.

The home gateway 19 shown in Figure 19 performs all functions needed for managing the private network 11 and for internetworking with the public internet. That is, the home gateway includes a router, which may perform IP network address translation, a Dynamic Host Configuration Protocol (DHCP) server, a Domain Name System (DNS) name server, etc. However, the invention may also be applied in connection with an access network, where at least one of the above-named functions that are traditionally located in the home gateway are performed in a node of the access network, e.g. in the edge router 25 or access node 21. This approach of shifting functions that traditionally are performed by Customer's Premises Equipment (CPE) is often called "virtual CPE". For example, the DHCP server may be placed on a node of the access network so that the network operator can ensure that the predefined CDN entity address is not used by another node of the private network 13. When using a domain name as the predefined CDN entity address, a name server deployed on a node of the access network may ensure that this domain name is resolved correctly to an IP address of the CDN entity 33. The tunnel 37 established between the private network 13 and the access node 21 according to the embodiments described herein may be exploited to deploy at least one function of the CPE on the access node 21 rather than on the edge router 25 (e.g. NAT)

In the following, the operation of the access network 11 and the content distribution network 27 is described in more detail. In particular methods are described that can be executed on the portal server 29, the access node 21 and the home gateway 19. These network elements 29, 21, 19 are operable to execute the respective methods. To this end, the network elements 29, 21, 19 may comprise a processor programmed for executing the respective method. Accordingly, computer programs may be provided that execute the respective method when run on the processor of the respective network element 29, 21, 19.

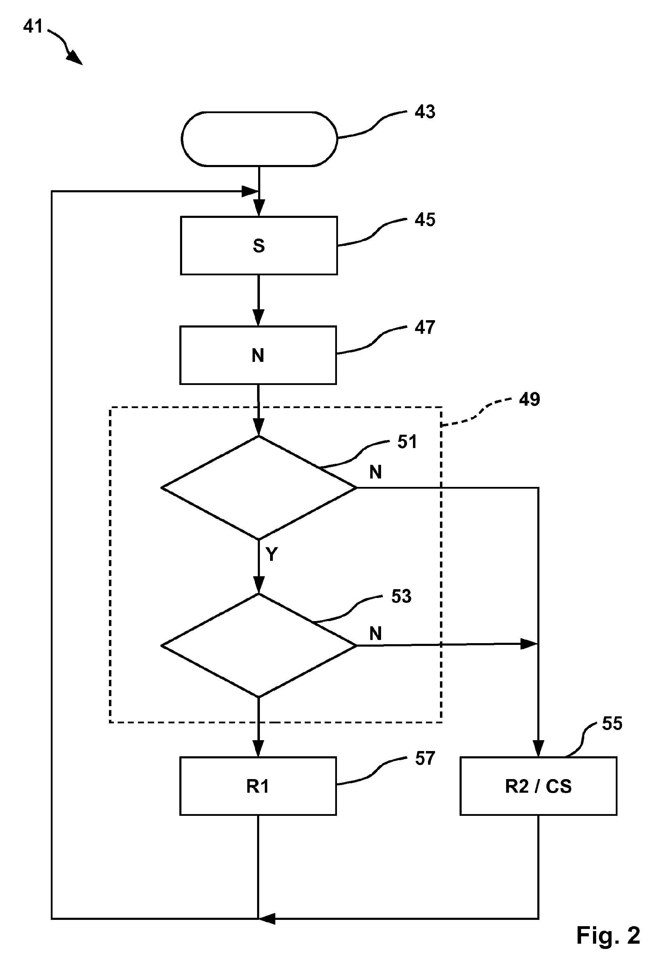

Figure 2 shows a flowchart of a first method 41 for responding to the streaming request S transmitted by the node 23. The first method 41 may be executed by the processor of the portal server 29. After a start 43 of the first method 41, a step 45 is executed. Step 45 waits until the streaming request S arrives and then receives the streaming request S.

Then a step 47 of the first method 41 is executed that determines a source address N included in the streaming request S, preferably a network layer protocol address such as an IP address.

After the source address N of the node 21 has been determined, the first method 41 executes a block 49 for deciding on whether the request S shall be served by the CDN entity 33. A first branch 51 of block 49 checks based on the source address N if the request has been transmitted using the access network 11. The check performed in branch 51 may include comparing an IP address prefix of the source address N with at least one IP address prefix assigned to the access network 11. If the prefix of the address N matches a prefix assigned to the access network 11 then branch 51 concludes that the streaming request S is originating from the node 23 using the access network 11. If so (Y), a second branch 53 of block 49 is executed. Otherwise (N), it can be concluded that the streaming request S was not sent by the node 23 or that the node 23 was connected to a different access network when transmitting the streaming request S and the execution of the first method continues with a step 55.

Branch 53 checks if the requested content stream CS is available at the CDN entity 33, i.e. if the CDN entity 33 will transmit the stream if the node 23 would send the same streaming request S to the CDN entity 33. Since the associated CDN node 35 has limited storage capacity, it cannot hold a copy of every stream that could be specified in the streaming request S. Therefore, branch 53 may check if the stream is currently stored on the associated CDN node 35. This check may be based on a predefined storage policy applied by the associated CDN node 35. In the shown embodiment, the streams stored on the associated CDN node 35 include a predefined set of live streams. The storage policy consists in storing the live streams of the predefined set for a certain sliding time window W ending at the current time of day. Storing the live stream during the time window allows a user of the streaming service (e.g. a HTTP-based TV service) to pause playback of the stream without storing steaming data locally in the node 23. Moreover, missed TV transmissions can be watched some time after they have been broadcasted. The time window W may be several days, e.g. one, two or three days. Consequently, step 53 checks whether the start of the requested live stream is within the time window W. If so (Y), a step 57 of the first method 41 is executed. Otherwise, the first method 41 continues with step 55.

In another embodiment, branch 53 can be omitted, so that all requests considered originating from the node 23 by branch 51 are handled by node 35. In case node 35 does not have the copy of the requested stream available, node 35 can get this copy from CDN node 31 or another node of the content delivery network 27.

In step 57, the method 41 returns the CDN entity address of the CDN entity 33 to the requesting node 23. The CDN entity address is suitable for contacting the CDN entity 33 from within the local network 13. In the shown embodiment, step 57 returns a redirection message to the requesting node 23, the redirection message including the CDN entity address. Any appropriate application layer protocol may be applied for encoding and/or transmitting the streaming request to the portal server 29 and for returning the CDN entity address and/or the redirection message. In an embodiment, the Hypertext Transfer Protocol (HTTP) is applied for performing HTTP live streaming. The redirection message may be a HTTP response message with a Location header comprising the CDN entity address of the CDN entity 33.

The CDN entity address may be arbitrarily predefined such that in every private network 13 connected to the access network 11 from which the content delivery network 27 shall be usable the same predefined CDN entity address may be applied for contacting the CDN entity 33 of the private network 13 to which the requesting node 23 is connected. In the exemplary scenario illustrated in Figure 1, the predefined CDN entity address is the private IPv4 address 192.168.1.199. In another embodiment, an IPv6 address or a domain name is used as the predefined CDN entity address. When using an IPv4 address, an IPv6 address or a domain name as the predefined CDN entity address, step 57 may return the URL included in the received streaming request S with its host part replaced with the predefined CDN entity address.

Step 55, which is executed if block 49 has decided not to return the CDN entity address, may either serve the request S or return the address of another CDN node 31 (e.g. by returning a further redirection message R2 to the requesting node 23) in order to redirect the request to this CDN node 31. Serving a streaming request includes transmitting the requested stream to the requesting node 23. As a consequence, the predefined set of streams will be served by the CDN entity 33 using the CDN node 33, whereas the remaining streams may be served by the portal server 29 or the conventional CDN node 31. The decision performed in block 49 has the effect that content streams available on the associated CDN nodes 35 are served via the CDN entities 33, whereas less popular content streams that are not handled by the associated CDN nodes 35 are served by the conventional CDN node 31. In addition, the decision of block 49 ensures that streaming requests originating from client nodes or private networks that do not have access to a CDN entity 33 are served by the conventional CDN node 31 or directly by the portal server 29.

After step 55 or 57 has been completed, the method 41 returns to step 45 in order to wait for the next streaming request S to be processed.

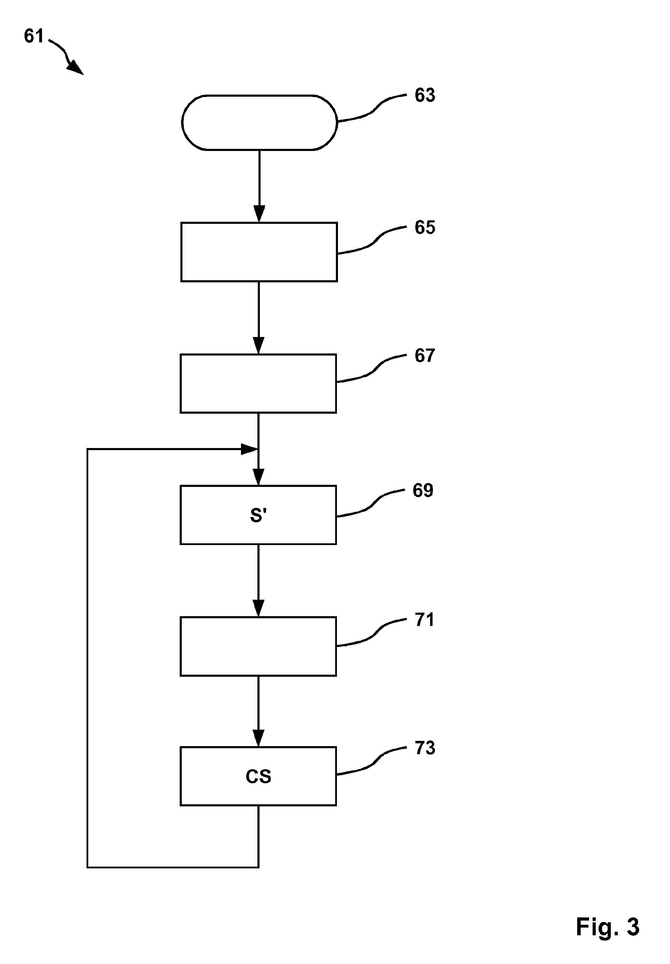

Figure 3 shows a flowchart of a second method 61 to be executed by the access node 21 for each CDN entity 33. After a start 63 of the second method 61, a step 65 is executed for providing the at least one private network 13 with access to the wide area network (e.g. the Internet 15). Step 65 may include known operations that may be specific to the communications technology used on the subscriber line 17. In particular, step 63 may include establishing the data communication link that can be used for setting up the access pipe 39 between the home gateway 19 and the edge router 25.

A further step 67 of the second method 61 establishes a communication link (e.g. the tunnel 37) between the home gateway 19 and the access node 21 such that the CDN entity 33 has access to the private network 13 and is accessible from the private network 13. In other words, the private network 13 is extended towards the CDN entity 33 of the access node 21. That is, the CDN entity 33 can be considered as a virtual network element of the private network 13. In a practical implementation of the access node 21, a processor of the access node may emulate a larger number of different CDN entities 33 belonging to different private networks 13 owned by the individual customers. However, as described above, the individual CDN entities 33 of a single access network 11 have the same address of local scope (e.g. valid within the respective private network 13 or a part of it only) so that the portal server 29 can easily generate the redirecting message in step 57.

A step 69 of the second method 61, which should be executed after the tunnel 37 has been set up in step 67, waits until it has received a further streaming request S' originating from a network element of the private network 13 such as the node 23. In case that the node 23 has initially directed the streaming request S to the portal server 29 and then received the above-discussed redirection message R1, the further streaming request S' refers to a stream that is available on the CDN node 35 associated with the CDN entity 33. That is, the node 23 transmits the further streaming request S' upon reception of the returned CDN entity address, which may be contained in the redirection message R1.

In a step 71, the second method 61 forwards the request S' or at least a descriptor of the requested stream to the associated CDN node 35. The CDN associated node 35 returns the stream to the CDN entity 33 in response to the forwarded request S' or descriptor. The second method 61 has a step 73 for receiving the content stream CS from the CDN node 35 and forwarding the content stream CS over the private network 13 to the requesting node 23.

When streaming has been initiated, the second method 61 may continue with step 69 in order to process the next streaming request S'.

To sum up, the embodiments of the invention described herein improve the scalability of streaming services by including the CDN entity 33 in the access node 21 and associating a CDN node 35 with the CDN entities of one or more access nodes 21. The portal server 29 checks if the streaming request S sent by a client node 23 can be served via the CDN entity 33 and redirects the node 23 to the CDN entity 23 if applicable. As a consequence, the content streams CS can be transported efficiently over to the Internet 15 and the backhaul link 26 either by multicast or by unicast. Moreover, bitrate adaptive streaming and functions that require temporary storage like pausing and viewing missed TV transmissions can be provided efficiently.

## Claims

1. Method (41) for responding to a streaming request (S) related to a content stream (CS) to be delivered by a content delivery network (27) to a node (23) connected to a private network (13) of a customer of an operator of a fixed access network (11), wherein the method (41) comprises
- receiving (45) the streaming request (S);
- determining (47) a source address (N) of the streaming request (S);
- deciding (49) on whether the request (S) shall be served by a content delivery network entity (33) belonging to the private network (13), wherein the deciding (49) is based on the determined source address (N); and
- returning (57) an address of the content delivery network entity (33) to the node (23) if a result of said deciding is that the request shall be served by the content delivery network entity (33).

2. Method (41) according to claim 1, wherein the deciding (49) comprises concluding (51) that the streaming request (S) shall be served by the content delivery entity (33) if the source address (N) is a public network layer address of the fixed network (11).

3. Method (41) according to claim 1 or 2, wherein the address of the content delivery entity (33) is returned as part of a redirection message (R1), preferably an application layer redirection message.

4. Method (41) according to one of the precedent claims, wherein the address of the content delivery entity (33) is a predefined address belonging to an address range assigned to the private network (13), preferably a predefined IP address.

5. Method (41) according to one of the precedent claims, wherein said deciding (49) comprises checking (53) whether a content stream specified in the streaming request (S) is currently available for being served by the content delivery network entity (33).

6. Portal server (29) for responding to a streaming request (S) related to a content stream (CS) to be delivered by a content delivery network (27) to a node (23) connected to a private network (13) of a customer of an operator of a fixed access network (11), wherein the portal server (29) is operable for
- receiving (45) the streaming request (S);
- determining (47) a source address (N) of the streaming request (S);
- deciding (49) on whether the request (S) shall be served by a content delivery network entity (33) belonging to the private network (13), wherein the deciding (49) is based on the determined source address (N); and
- returning (57) an address of the content delivery network entity (33) to the node (23) if a result of said deciding is that the request shall be served by the content delivery network entity (33).

7. Method (61) for operating an access node (21) of a fixed access network (11), the method (61) comprising
- communicating (67) with a customer's premises device (19) in order to access the private network (13) directly for providing local network services;
wherein the method (61) further comprises
- receiving (69) a streaming request (S') from a node (23) connected to the private network (13), the streaming request (S') being addressed to a content delivery network entity (33) belonging to the private network (13); and
- transmitting (73) a content stream specified in the streaming request (S') to the node (23).

8. Method (61) according to claim 7, wherein the method (61) comprises receiving the specified content stream (CS) from a content delivery network (27) and storing the received stream in a storage arrangement (36) assigned to multiple, preferably all, private networks (13) for which the access node (21) is providing network access.

9. Method (61) according to claim 8, wherein the method (61) comprises maintaining the stored content stream in the storage arrangement (36) for a predefined time window (W) ending at the current time of execution of the method (61).

10. Method (61) according to one of claims 7 to 9, wherein providing access to the private network comprises establishing a tunnel (37) between the customer's premises device (19) and the access node (21).

11. Access node (21) for a fixed access network (11), the access node (21) comprising
- a processor operable for communicating (67) with a customer's premises device (19) in order to access the private network (13) directly for providing local network services;
wherein the processor is further operable
- receiving (69) a streaming request (S') from a node (23) connected to the private network (13), the streaming request (S') being addressed to a content delivery network entity (33) belonging to the private network (13); and
- transmitting (73) a content stream specified in the streaming request (S') to the node (23).

12. Method for operating a customer premises device (19) connectable to customer side end of a subscriber line (17) of a fixed access network (11), the method comprising
- providing a communication link (39) to a network element (25) of the access network (11), the communication link (39) being adapted for granting wide area network access to a private network (13) of a customer of an operator the access network (11); and;
- forwarding a streaming request (S') transmitted by a node (23) of the private network (13) to a content delivery network entity (33) of the access node (21);
- receiving a response to the streaming request (S') from the content delivery network entity (33); and
- forwarding the received response to the node (12) of the private network (13).

13. Customer premises device (19) connectable to customer side end of a subscriber line (17) of a fixed access network (11), the device (19) comprising
- an arrangement for providing a communication link (39) to a network element (25) of the access network (11), the communication link (39) being adapted for granting wide area network access to a private network (13) of a customer of an operator the access network (11); and
- a processor operable for forwarding a streaming request (S') transmitted by a node (23) of the private network (13) to a content delivery network entity (33) of an access node (21) of the access network (11), receiving a response to the streaming request from the content delivery network entity (33) and forwarding the received response to the node (23) of the private network (13).

14. Software program product, preferably a computer readable storage medium, comprising a computer program that is programmed for executing a method according to one of claims 1 to 5, 7 to 10 or 12 when run on a computer.

15. Content delivery system comprising a portal server (29) according to claim 6, an access node (21) according to claim 11 and/or a customer premises device (19) according to claim 13.
